# EUROPEAN PATENT APPLICATION

(11) **EP 2 219 374 A1**
(43) Date of publication of application: **18.08.2010**
(21) Application number: 09152819.0
(22) Date of filing: 13.02.2009
(51) Int. Cl.: H04N 7/16

(54) **Securely providing a control word from a smartcard to a conditional access module**

(71) Applicant: Irdeto Access B.V., 2132 HD Hoofddorp (NL)
(72) Inventor: Wajs, Andrew Augustine, 2023 AA, Haarlem (NL); Westerveld, Egbert, 5706 DZ, Helmond (NL)
(74) Representative: van Looijengoed, Ferry Antoin Theodorus

(57) **Abstract**

The invention provides a method, a smartcard, a conditional access module (CAM) of a receiver and a receiver, such as e.g. a set-top box, for securely providing a control word from the smartcard to the CAM. Diversification data from the smartcard and the CAM is used to make the encryption key and decryption key to encrypt and decrypt the control word in the smartcard and CAM, respectively, dependent on a user interaction with the receiver, such as e.g. selecting a service in the set-top box.

## Description

### FIELD OF THE INVENTION

The present invention relates to method for securely providing a control word from a smartcard to a conditional access module, a method for securely obtaining a control word in a conditional access module from a smartcard, a smartcard for securely providing a control word to a conditional access module, a conditional access module of a receiver for securely obtaining a control word from a smartcard and a receiver for descrambling scrambled data.

### BACKGROUND

Conditional access systems are well known and widely used in conjunction with currently available pay television systems. At present, such systems are based on the transmission of services scrambled with control words (also referred to as service encryption keys) that are received by subscribers having a conditional access module (CAM) and a smartcard for each subscription package. Typically these services are transmitted by a head-end system in a broadcast stream. Implementations are known wherein CAM functionality is integrated in receiver such as a set-top box, a television, a personal video recorder, a mobile phone, a smart phone or a computer appliance. The smartcard is typically a separate card that is manually inserted into the CAM before operation, but can be integrated in the CAM. The smartcard for a subscription package from a particular service provider allows the scrambled services to be descrambled by a descrambler within the CAM and viewed. The broadcast stream further typically contains entitlement management messages (EMMs), also referred to as key management messages (KMMs), and entitlement control messages (ECMs), which are necessary for the smartcard to obtain the control word. ECMs are used to carry the control word in encrypted form. EMMs are used to convey the secret keys used to decrypt the ECMs in the smartcard to extract the control word, to decrypt other data related to the addition or removal of viewing/usage rights, and/or to decrypt other user-specific data.

Control word piracy is a significant problem in digital video broadcasting (DVB) systems. Sometimes attackers are able to intercept a control word that is transmitted from the smartcard to the CAM and redistribute it over local wireless networks or over the internet. The redistributed control word is then used to descramble the scrambled services without a legitimate smartcard.

A known method to protect control words communicated from the smartcard to the CAM uses symmetrical encryption to encrypt the control word under a shared key in the smartcard before transmission to the CAM and decrypt the control word in the CAM using the shared key. A weakness of this symmetrical encryption is the shared trust between the smartcard and the CAM in keeping the used encryption key secret. If a hacker manages to acquire or derive the key and provides multiple CAMs with the same key, encrypted messages can be decrypted and scrambled services can be descrambled by all the CAMs.

### SUMMARY OF THE INVENTION

It is an object of the invention to provide an improved method for providing a control word from a smartcard to a CAM.

According to an aspect of the invention a method in a smartcard is proposed for securely providing a control word from the smartcard to a conditional access module of a receiver. The receiver is configured for interaction with a user, such as e.g. selecting a service on the receiver. The method comprises the step of obtaining diversification data from at least one of the smartcard and the conditional access module, wherein the diversification data is dependent on the user interaction. The method further comprises the step of generating an encryption key using a diversification function having as input the diversification data and having as output the encryption key. Typically the diversification function is a XOR function, but any other mathematical function may be used. The diversification function makes the encryption key dependent on the detected user interaction. The method further comprises the step of encrypting the control word using the encryption key to obtain an encrypted control word. If the diversification data is obtained from the smartcard, then the diversification data is provided to the conditional access module for generating a decryption key to decrypt the encrypted control word. The method further comprises the step of providing the encrypted control word to the conditional access module.

According to an aspect of the invention a smartcard is proposed for securely providing a control word to a conditional access module of a receiver. The receiver is configured for interaction with a user. The smartcard comprises at least one of a first detector and a second detector. The first detector is configured to detect a first user interaction, such as e.g. selecting a service on the receiver. The first detector is further configured to generate first diversification data dependent on the first user interaction. The second detector is configured to obtain from the conditional access module second diversification data dependent on a second user interaction, such as e.g. selecting a service on the receiver. The smartcard further comprises an encryption key generator configured to generate an encryption key with a diversification function. The diversification function has as input at least one of the first and second diversification data. The output of the diversification function is the encryption key. The smartcard further comprises an encryptor configured to encrypt the control word using the encryption key to obtain an encrypted control word. The smartcard is configured to provide the encrypted control word to the conditional access module.

According to an aspect of the invention a method in a conditional access module is proposed for securely obtaining a control word in the conditional access module of a receiver from a smartcard. The receiver is configured for interaction with a user, such as e.g. selecting a service on the receiver. The method comprises the step of obtaining in the conditional access module diversification data from at least one of the conditional access module and the smartcard, wherein the diversification data is dependent on the user interaction. If the diversification data is obtained from the conditional access module, then the diversification data is provided to the smartcard for generating an encrypted control word. The method further comprises the step of generating a decryption key using a diversification function having as input the diversification data and having as output the decryption key. Typically the diversification function is a XOR function, but any other mathematical function may be used. The diversification function makes the decryption key dependent on the detected user interaction. The method further comprises the step of receiving the encrypted control word from the smartcard. The method further comprises the step of decrypting the encrypted control word using the decryption key to obtain the control word.

According to an aspect of the invention a conditional access module of a receiver is proposed for securely obtaining a control word from a smartcard. The receiver is configured for interaction with a user. The conditional access module is configured to receive an encrypted control word from the smartcard. The conditional access module comprises at least one of a first detector and a second detector. The first detector is configured to detect a first user interaction, such as e.g. selecting a service on the receiver. The first detector is further configured to generate first diversification data dependent on the first user interaction. The second detector is configured to obtain from the smartcard second diversification data dependent on a second user interaction, such as e.g. selecting a service on the receiver. The conditional access module further comprises a decryption key generator configured to generate a decryption key with a diversification function. The diversification function has as input at least one of the first and second diversification data. The output of the diversification function is the decryption key. The conditional access module further comprises a decryptor configured to decrypt the encrypted control word using the decryption key to obtain the control word.

By adding diversification data to the diversification function whereby the diversification data depends on the user interaction with the receiver, it advantageously becomes difficult for another smartcard or conditional access module to follow the diversification function as the user interactions need to be followed exactly. As a result the encryption and decryption key used for encrypting and decrypting the control word in the smartcard and conditional access module, respectively, is unique to the smartcard and conditional access module and cannot be shared with other smartcards and conditional access modules.

Using the same diversification function in the encryption key generator and decryption key generator ensures that the encryption key and decryption key matches. The diversification data exchanged between the smartcard and the conditional access module need not be encrypted as the diversification function is kept secret. A hacker acquiring the diversification data thus cannot generate the decryption key.

The user interaction is e.g. the selection of a service on the receiver by the user. It is possible to detect other types of user interaction, such as pressing any button on the remote control or directly on the receiver, e.g. a button for changing the volume. When the receiver is equipped with external sensors, it is even possible to detect a temperature change, a motion of the receiver or a motion of the user near the receiver.

The embodiments of claims 2 and 8 advantageously enable the encryption key used for encrypting the control word in the smartcard to be dependent on previous control words. As a result it advantageously becomes more difficult for another smartcard to follow the diversification function as the control words need to be followed exactly.

The embodiments of claims 3 and 9 advantageously enable obfuscation of the encryption key within the smartcard. This advantageously makes it highly unlikely to reverse engineer the diversification function by analysing its output, i.e. the encrypted encryption key.

The embodiment of claim 10 advantageously enables that the encryption key cannot be derived from the diversification function.

The embodiments of claims 5 and 12 advantageously enable the decryption key used for decrypting the control word in the conditional access module to be dependent on previous control words. As a result it advantageously becomes more difficult for another conditional access module to follow the diversification function as the control words need to be followed exactly.

The embodiments of claims 6 and 13 advantageously enable obfuscation of the decryption key within the conditional access module. This advantageously makes it impossible to reverse engineer the diversification function by analysing its output, i.e. the encrypted decryption key.

The embodiment of claim 14 advantageously enables that the decryption key cannot be derived from the diversification function.

According to an aspect of the invention a receiver is proposed for descrambling scrambled data. The receiver is e.g. a set-top box. The receiver comprises a first descrambler configured to descramble a first part of the scrambled data. The receiver further comprises a second descrambler configured to descramble a second part of the scrambled data. The receiver further comprises the conditional access module having one or more of the features as defined above. The first descrambler is configured to use the control word obtained by the conditional access module to descramble the first part of the scrambled data (sd).

This advantageously enables the receiver to malfunction with a redistributed pirated control word, as multiple control words are needed to descramble the scrambled data.

The embodiment of claim 16 advantageously enables descrambling of higher bit rate scrambled video requiring more computation power in the second descrambler, which is typically implemented in hardware, and descrambling of lower bit rate scrambled audio requiring less computation power in the first descrambler, which is typically implemented in software. It is possible to have both descramblers implemented in hardware or software.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows the basic concept of a state based key exchange of an exemplary embodiment of the invention;
Fig.2 shows a smartcard and a CAM of an exemplary embodiment of the invention;
Fig.3 shows a receiver, such as e.g. a set-top box, of an exemplary embodiment of the invention;
Figs.4 and 5 show the steps of a method performed in a smartcard of exemplary embodiments of the invention; and
Figs.6 and 7 show the steps of a method performed in a CAM of exemplary embodiments of the invention.

### DETAILED DESCRIPTION OF THE DRAWINGS

The invention provides a state based key exchange, wherein control words communicated between a smartcard and a CAM in a receiver are encrypted with a diversified key. The CAM is typically integrated in a receiver such as a set-top box, but can be implemented in other type of receivers like a television, a personal video recorder, a mobile phone, a smart phone or a computer appliance. The diversification is based user interaction with the set-top box, which is detected in the CAM, the smartcard or both.

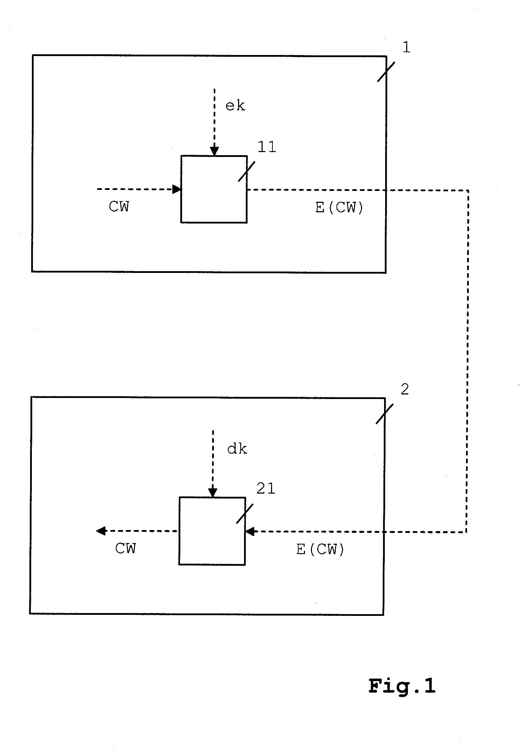

The basic concept of the state based key exchange is shown in Fig.1 and is based on symmetrical encryption of the control words CW. The smartcard 1 receives one or more control words CW in a manner known per se, e.g. through ECMs transmitted to the smartcard. The smartcard 1 uses encryption key ek to encrypt the control word in encryptor 11 and the encrypted control word E(CW) is transmitted to the CAM 2. The CAM 2 uses decryption key dk to decrypt the encrypted control word E(CW) in decryptor 21 and obtains the control word. The control word obtained in the CAM can be used by the set-top box to descramble services such as a pay television channel.

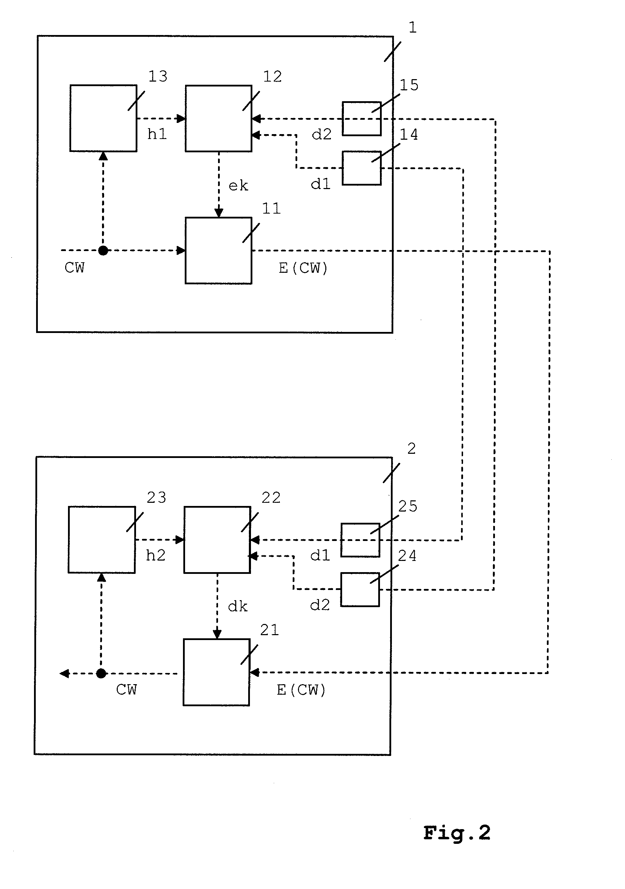

Referring to Fig.2, the symmetrical keys ek and dk are cycled by a diversification function within an encryption key generator 12 in the smartcard 1 and a diversification function a decryption key generator 22 in the CAM 2. Using the same diversification function in the key generators 12 and 22 ensures that the encryption key ek and decryption key dk matches. The function of the diversification function is to make the encryption key ek and decryption key dk dependent on the detected user interaction. By adding diversification data d1 and/or d2 from the smartcard 1 and/or CAM 2, respectively, to the diversification function whereby the diversification data comprises an indication of the user interaction, it advantageously becomes difficult for another CAM to follow the diversification function as the user interactions need to be followed exactly.

The detected user interaction is typically based on the selected service of the set-top box. Detection of the user interaction can be implemented in various manners. In the CAM 2 the user interaction is e.g. detected when the set-top box receives a remote control command or a button is pressed on the set-top box for changing a television channel. It is possible to detect other types of user interaction, such as pressing any button on the remote control or directly on the set-top box, e.g. a button for changing the volume. When the set-top box is equipped with external sensors, it is even possible to detect a temperature change, a motion of the set-top box or a motion of a person near the set-top box. In the smartcard 1 the user interaction is e.g. detected by monitoring a change in the contents of EMMs and ECMs being indicative of a change of the selected service.

Optionally the diversification functions uses the outcome of a hashing function in a hash generator 13 in the smartcard 1 and a hashing function in a hash generator 23 in the CAM 2 as additional input for generating the encryption key ek and decryption key dk, respectively. Generally, a hashing function is a mathematical function which converts data into a small datum, usually a single integer. The values returned by a hash function are called hash values, hash codes, hash sums, or simply hashes. The invention can use any known hashing algorithm. A hash value h1 is generated by a hash generator 13 in the smartcard and a hash value h2 is generated by a hash generator 23 in the CAM. The hashing functions in the hash generators 13 and 23 perform a calculation on the control word CW, a previous control word and a previous hash value. The outcome of the hashing function, i.e. the hash values h1 and h2, is then guaranteed equal only if all control words (i.e. current control word CW and previous control words) are the same for the hash generators 13 and 23. By adding the hash value to the diversification function, it advantageously becomes even more difficult for another CAM to follow the diversification function as the control words need to be followed exactly.

The hashing function (H) is defined as follows: hash value = H(CW, previous control word, previous hash value)

The hashing function is initialized with a fixed predefined value for the hash value. The result is that the hashing function H will create an output which is based on the content of all the control words processed by this function after initialization. Any deviation between the control words on the smartcard 1 and CAM 2 will cause a key mismatch after the next detection of user interaction on either the smartcard 1 or the CAM 2 and generation of keys ek and dk. This functionality advantageously makes reverse engineering of the hash value and diversification function difficult due to the missing direct response.

The diversification function (DIV) in the smartcard 1 is defined as follows:
ek = DIV(diversification data, hash value h1)

The diversification function (DIV) in the CAM 2 is defined as follows:
dk = DIV(diversification data, hash value h2)

Optionally the diversification function encrypts the keys ek and dk with a Global Diversification key (GDk) stored in the smartcard 1 and CAM 2. The diversification function thus uses (symmetrical) encryption which can take the hash value from the hash generator 13 and the diversification data d1 and/or d2 and encrypt this data in e.g. cipher-block chaining (CBC) mode. The encrypted key is then used as key to encrypt / decrypt the control words in the encryptor 11 / decryptor 21, respectively.

The diversification function (DIV) in the smartcard 1 is then defined as follows:
ek = E_{GDk}(DIV(diversification data, hash value h1))

The diversification function (DIV) in the CAM 2 is then defined as follows:
dk = E_{GDk}(DIV(diversification data, hash value h2))

Typically the diversification function is a XOR function, but any other mathematical function may be used.

The diversification function is optionally implemented as a software module that is protected by white-box cryptography or a software code obfuscation technique. Such protection ensures that the encryption key ek in the smartcard 1 and the decryption key dk in the CAM 2 cannot be derived from the diversification function. Moreover, intermediate results within the diversification function cannot be derived. Any known white-box cryptography or software code obfuscation technique can be used.

In a conditional access system scrambled data is typically broadcasted as a DVB stream comprising a multiplexed audio component and video component. The audio component has a relative low bit rate, e.g. 128 kbit/s, while the video component has a relative high bit rate, e.g. 2000 kbit/s. For descrambling high bit rate scrambled video the computational power of a hardware descrambler is needed. Descrambling low bit rate scrambled audio requires less computational power and can therefore be performed by software.

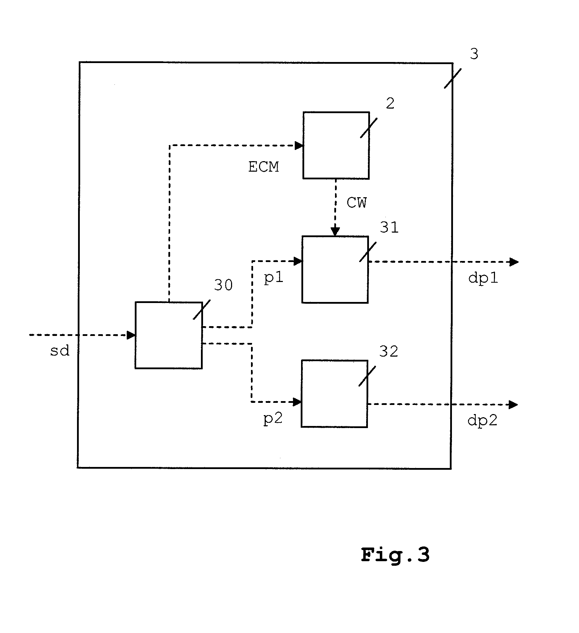

Fig.3 shows a receiver 3 implementing the CAM 2. The receiver 3 is e.g. a set-top box or another device implementing the CAM 2 such as a television, a personal video recorder, a mobile phone, a smart phone or a computer appliance. Scrambled data sd, e.g. a scrambled television channel received in a DVB broadcast stream, is demultiplexed in demultiplexer 30 to obtain a first part p1 containing the audio component of the scrambled data sd and a second part p2 containing the video component of the scrambled data sd. The audio component has a relative low bit rate, e.g. 128 kbit/s, while the video component has a relative high bit rate, e.g. 2000 kbit/s. The broadcast stream further contains on or more ECMs, which are necessary for the smartcard 1 to obtain the control word. The ECMs are demultiplexed from the broadcast stream in the demultiplexter 30 and transmitted, via the receiver, to the smartcard 1. In the example of Fig.3 the audio component is descrambled by the first descrambler 31 using the control word obtained from the CAM 2. The video component is descrambled by the second descrambler 32 in a different manner, e.g. using a control word obtained from another smartcard or using another control word obtained from the smartcard 1 or CAM 2. The output of the set-top box is a descrambled audio component dp1 and descrambled video component dp2.

It is possible to descramble the video component with the first descrambler 31 and descramble the audio component with the second descrambler 32. It is also possible to have other parts demultiplexed from the scrambled data sd and have one or more of these parts descrambled by the first descrambler 31 while having other parts descrambled by the second descrambler 32.

For descrambling high bit rate scrambled video the computational power of a hardware descrambler is needed. Descrambling low bit rate scrambled audio requires less computational power and can therefore be performed by software. The first descrambler 31 is therefore typically a software descrambler. The second descrambler 32 is typically a hardware descrambler. To enable the software descrambler 32 the set-top box 3 is typically equipped with a memory and a processor for loading and running software. Software downloading and running capabilities of the set-top box can be used to add the software descrambling functionality to the hardware descrambling functionality of a set-top box.

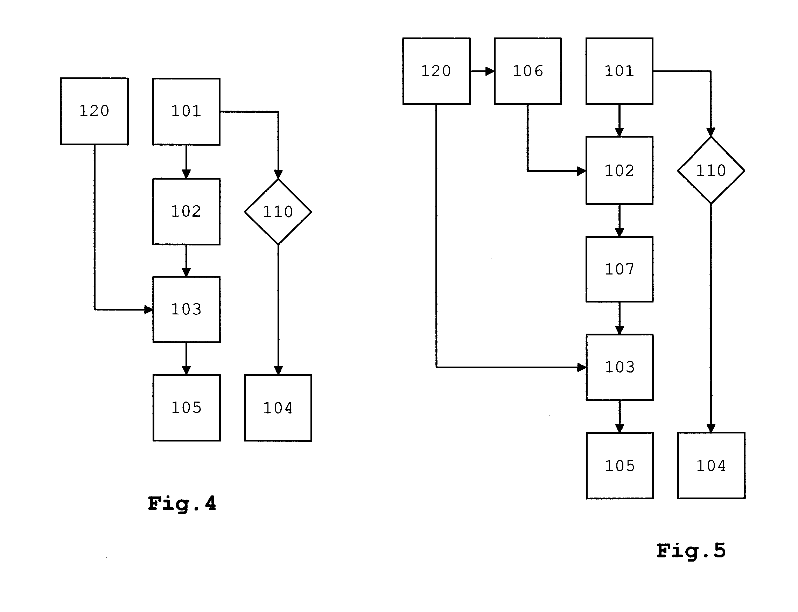

Fig.4 shows the steps of a method of an exemplary embodiment. In step 120 a control word CW is received in the smartcard 1, e.g. through an ECM. The control word CW is encrypted in step 103 using encryption key ek. The encrypted control word E(CW) is provided to the CAM 2 in step 105. The encryption key ek is obtained through steps 101 and 102. In step 101 the diversification data d1 or d2 is obtained in the smartcard 1. The diversification data is used in a diversification function to generate the encryption key ek in step 102. If user interaction is detected in the smartcard 1, then the diversification data d1 is obtained from the smartcard and is to be provided to the CAM 2 to enable the CAM 2 to generate a decryption key dk. Hereto it is determined in step 110 if the user interaction was detected in the smartcard 1 and if this is the case the diversification data d1 is provided to the CAM 2 in step 104.

In addition to the steps shown in Fig.4, Fig.5 shows the optional step of generating a hash value in step 106, which is used in the diversification function to generate the encryption key ek in step 102. The optional step of encrypting the encryption key ek is shown in step 107. The encrypted encryption key is used as encryption key for encrypting the control word CW in step 103.

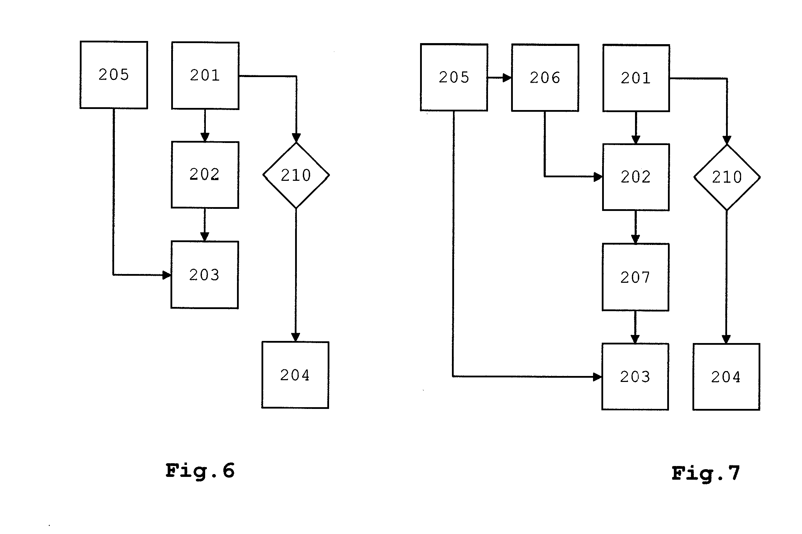

Fig.6 shows the steps of a method of an exemplary embodiment. In step 205 an encrypted control word E(CW) is received in the CAM2 from the smartcard 1. The encrypted control word E(CW) is decrypted in step 203 using decryption key dk. The decrypted control word CW can be used to descramble services in the set-top box wherein the CAM 2 is embedded. The decryption key dk is obtained through steps 201 and 202. In step 201 the diversification data d1 or d2 is obtained in the CAM 2. The diversification data is used in a diversification function to generate the decryption key dk in step 202. If user interaction is detected in the CAM 2, then the diversification data d2 is to be provided to the smartcard 1 to enable the smartcard 1 to generate an encryption key ek. Hereto it is determined in step 210 if the user interaction was detected in the CAM 2 and if this is the case the diversification data d2 is provided to the smartcard 1 in step 204.

In addition to the steps shown in Fig.6, Fig.7 shows the optional step of generating a hash value in step 206, which is used in the diversification function to generate the decryption key dk in step 202. The optional step of encrypting the decryption key dk is shown in step 207. The encrypted decryption key is used as decryption key for decrypting the encrypted control word E(CW) in step 203.

## Claims

1. A method for securely providing a control word from a smartcard to a conditional access module of a receiver, the receiver being configured for interaction with a user, the method comprising the steps in the smartcard of:
obtaining (101) diversification data from at least one of the smartcard and the conditional access module, the diversification data being dependent on the user interaction;
generating (102) an encryption key using a diversification function having as input the diversification data and having as output the encryption key;
encrypting (103) the control word using the encryption key to obtain an encrypted control word;
if the diversification data is obtained from the smartcard, providing (104) the diversification data to the conditional access module for generating a decryption key to decrypt the encrypted control word; and
providing (105) the encrypted control word to the conditional access module.

2. The method according to claim 1, further comprising the step of generating (106) in the smartcard a hash value using a hashing function having as input the control word, a previous control word and a previous hash value, and wherein the diversification function has the hash value and the diversification data as input.

3. The method according to claim 1 or 2, wherein the step of generating (102) the encryption key includes the step of encrypting (107) the encryption key to obtain an encrypted encryption key and the output is the encrypted encryption key, and wherein the encrypted encryption key is used as encryption key to encrypt the control word.

4. A method for securely obtaining a control word in a conditional access module of a receiver from a smartcard, the receiver being configured for interaction with a user, the method comprising the steps in the conditional access module of:
obtaining (201) diversification data from at least one of the conditional access module and the smartcard, the diversification data being dependent on the user interaction;
if the diversification data is obtained from the conditional access module, providing (204) the diversification data to the smartcard for generating an encrypted control word;
generating (202) a decryption key using a diversification function having as input the diversification data and having as output the decryption key;
receiving (205) the encrypted control word from the smartcard; and
decrypting (203) the encrypted control word using the decryption key to obtain the control word.

5. The method according to claim 4, further comprising the step of generating (206) in the conditional access module a hash value using a hashing function having as input the control word, a previous control word and a previous hash value, and
wherein the diversification function has the hash value and the diversification data as input.

6. The method according to claim 4 or 5, wherein the step of generating (202) the decryption key includes the step of encrypting (207) the decryption key to obtain an encrypted decryption key and the output is the encrypted decryption key, and wherein the encrypted decryption key is used as decryption key to decrypt the encrypted control word.

7. A smartcard (1) for securely providing a control word (CW) to a conditional access module (2) of a receiver, the receiver being configured for interaction with a user, the smartcard comprising:
at least one of a first detector (14) and a second detector (15), wherein the first detector (14) is configured to detect a first user interaction and to generate first diversification data (d1) dependent on a first user interaction, and wherein the second detector (15) is configured to obtain from the conditional access module (2) second diversification data (d2) dependent a second user interaction;
an encryption key generator (12) configured to generate an encryption key (ek) with a diversification function having as input at least one of the first (d1) and second (d2) diversification data and having as output the encryption key (ek); and
an encryptor (11) configured to encrypt the control word (CW) using the encryption key (ek) to obtain an encrypted control word (E(CW)),
wherein the smartcard (1) is configured to provide the encrypted control word (E(CW)) to the conditional access module (2).

8. The smartcard (1) according to claim 7, further comprising a hash generator (13) configured to generate a hash value (h1) with a hashing function using as input the control word (CW), a previous control word and a previous hash value, and wherein the diversification function has the hash value (h1) and the at least one of the first (d1) and second (d2) diversification data as input to generate the encryption key (ek).

9. The smartcard (1) according to claim 7 or 8, wherein the encryption key generator (12) is further configured to encrypt the encryption key to obtain an encrypted encryption key and the output is the encrypted encryption key, and wherein the encrypted encryption key is used as encryption key (ek) to encrypt the control word (CW).

10. The smartcard (1) according to any one of the claims 7-9, wherein the diversification function comprises a software code portion that is protected by white-box cryptography or software code obfuscation.

11. A conditional access module (2) of a receiver for securely obtaining a control word (CW) from a smartcard (1), the receiver being configured for interaction with a user, wherein the conditional access module (2) is configured to receive an encrypted control word (E(CW)) from the smartcard (1), the conditional access module comprising:
at least one of a first detector (24) and a second detector (25), wherein the first detector (24) is configured to detect a first user interaction and to generate first diversification data (d2) dependent on the first user interaction, and wherein the second detector (25) is configured to obtain from the smartcard (1) second diversification data (d1) dependent on a second user interaction;
a decryption key generator (22) configured to generate a decryption key (dk) with a diversification function having as input at least one of the first (d2) and second (d1) diversification data and having as output the decryption key (dk); and
a decryptor (21) configured to decrypt the encrypted control word (E(CW)) using the decryption key (dk) to obtain the control word (CW).

12. The conditional access module (2) according to claim 11, further comprising a hash generator (23) configured to generate a hash value (h2) with a hashing function using as input the control word (CW), a previous control word and a previous hash value, and wherein the diversification function has the hash value (h2) and the at least one of the first (d2) and second (d1) diversification data as input to generate the decryption key (dk).

13. The conditional access module (2) according to claim 11 or 12, wherein the decryption key generator (22) is further configured to encrypt the decryption key to obtain an encrypted decryption key and the output is the encrypted decryption key, and wherein the encrypted decryption key is used as decryption key (dk) to decrypt the encrypted control word (E(CW)).

14. The conditional access module (2) according to any one of the claims 11-13, wherein the diversification function comprises a software code portion that is protected by white-box cryptography or software code obfuscation.

15. A receiver (3) for descrambling scrambled data (sd), comprising a first descrambler (31) configured to descramble a first part (p1) of the scrambled data (sd), a second descrambler (32) configured to descramble a second part (p2) of the scrambled data (sd), and the conditional access module (2) according to any one of the claims 10-12, wherein the first descrambler (31) is configured to use the control word (CW) obtained by the conditional access module (2) to descramble the first part (p1) of the scrambled data (sd).

16. The receiver (3) according to claim 13, wherein the scrambled data (sd) is a digital video stream, the first part (p1) is an audio component of the digital video stream and the second part (p2) is a video component of the digital video stream.
